# EUROPEAN PATENT APPLICATION

(11) **EP 4 693 268 A1**
(43) Date of publication of application: **11.02.2026**
(21) Application number: 24838311.9
(22) Date of filing: 01.03.2024
(51) Int. Cl.: G09G 3/3208

(54) **IMAGE DISPLAY METHOD, ELECTRONIC DEVICE, AND COMPUTER STORAGE MEDIUM**

(30) Priority: 12.07.2023 CN 202310855119
(71) Applicant: Honor Device Co., Ltd., Shenzhen, Guangdong 518040 (CN)
(72) Inventor: YUE, Lingyan, Shenzhen, Guangdong 518040 (CN)
(74) Representative: MERH-IP Matias Erny Reichl Hoffmann Patentanwälte PartG mbB
(86) International application number: PCT/CN2024/079723
(87) International publication number: WO 2025/011050

(57) **Abstract**

This application relates to the field of display technologies, and provides an image display method, an electronic device, and a computer storage medium. The method includes: A display driver of the electronic device obtains a display frame rate of an application and a minimum refresh rate of a display screen; the display driver configures a first-type refresh rate queue for a display driver integrated circuit when the display frame rate is greater than the minimum refresh rate, where the first-type refresh rate queue includes at least two refresh rates that are arranged from high to low, and each of the refresh rates is greater than or equal to the display frame rate and less than or equal to the minimum refresh rate; the display driver controls the display driver integrated circuit to refresh an image to the display screen based on a 1st refresh rate in the first-type refresh rate queue; and in a case that an SF does not send an image, the display driver controls, based on a rank order of refresh rates in the first-type refresh rate queue, the display driver integrated circuit to refresh an image to the display screen based on a next refresh rate in the first-type refresh rate queue. Therefore, in a case that an upper-layer SF does not send an image, the DDIC may be prevented from repeatedly refreshing an image, thereby reducing unnecessary power consumption.

## Description

This application claims priority to Chinese Patent Application No. 202310855119.6, filed with the China National Intellectual Property Administration on July 12, 2023 and entitled "IMAGE DISPLAY METHOD, ELECTRONIC DEVICE, AND COMPUTER STORAGE MEDIUM", which is incorporated herein by reference in its entirety.

### TECHNICAL FIELD

Embodiments of this application relate to the field of electronic device display technologies, and in particular, to an image display method, an electronic device, and a computer storage medium.

### BACKGROUND

With continuous development of a display screen technology of an electronic device (for example, a mobile phone), more display screens that can support a plurality of refresh rates emerge. For example, a display screen that uses a low temperature polycrystalline oxide (low temperature polycrystalline oxide, LTPO) screen technology may support a plurality of refresh rates such as 120 Hz, 90 Hz, 60 Hz, 40 Hz, 30 Hz, 10 Hz, and 1 Hz. A higher refresh rate of a display screen represents a higher display frame rate that may be supported by the display screen, and smoother display of a corresponding picture. A lower refresh rate of the display screen represents a lower display frame rate that can be supported by the display screen, but represents more power consumption that may be saved. Therefore, to ensure a smooth picture and save specific power consumption as much as possible, an adaptive refresh rate technology appears at present.

However, a main principle of a conventional adaptive refresh rate technology is that a refresh rate switching instruction is delivered to a display driver integrated circuit (digital display indicator control, DDIC) based on a running scenario of an application (application, APP), so as to switch to an adapted refresh rate. Therefore, the adaptive refresh rate technology cannot be adapted to a case that a running scenario cannot be distinguished, and then a refresh rate of the DDIC cannot be reduced in the case that a running scenario cannot be distinguished, thereby resulting in an increase in unnecessary power consumption.

### SUMMARY

Embodiments of this application provide an image display method, an electronic device, and a computer storage medium, to resolve a problem of an increase in unnecessary power consumption caused by inability to reduce a refresh rate of a DDIC in a case that a running scenario cannot be distinguished.

To achieve the foregoing objective, the following technical solutions are used in embodiments of this application.

According to a first aspect, an image display method is provided. The method is applied to an electronic device including a display screen and a plurality of applications installed therein. The method includes: A display driver of the electronic device obtains a display frame rate of an application running in a foreground and a minimum refresh rate of the display screen; the display driver configures a first-type refresh rate queue for a display driver integrated circuit of the electronic device in a case that the display frame rate is greater than the minimum refresh rate, where the first-type refresh rate queue includes at least two refresh rates that are arranged from high to low, and each of the refresh rates is greater than or equal to the display frame rate and less than or equal to the minimum refresh rate; the display driver controls the display driver integrated circuit to refresh an image to the display screen based on a 1st refresh rate in the first-type refresh rate queue; and in a case that an SF of the electronic device does not send an image to the display driver, the display driver controls, based on a rank order of refresh rates in the first-type refresh rate queue, the display driver integrated circuit to refresh an image to the display screen based on a next refresh rate in the first-type refresh rate queue.

It can be learned from the foregoing description that, in the first aspect, after the display driver configures the first-type refresh rate queue in which refresh rates are distributed from high to low for the DDIC in a case that the upper-layer SF does not send an image, the display driver controls the DDIC to switch from a high refresh rate to a low refresh rate, so that the DDIC adaptively reduces the refresh rate based on an image sending frequency of an upper layer. Therefore, in a case that the upper-layer SF does not send an image, the DDIC may be prevented from repeatedly refreshing an image, thereby reducing unnecessary power consumption.

In a possible implementation of the first aspect, the method further includes: The display driver configures a second-type refresh rate queue for the display driver integrated circuit of the electronic device in a case that the display frame rate is equal to the minimum refresh rate, where a last refresh rate in the second-type refresh rate queue is equal to the display frame rate, and refresh rates preceding the last refresh rate are all null; and the display driver controls the display driver integrated circuit to refresh an image to the display screen based on the last refresh rate in the second-type refresh rate queue.

In another possible implementation of the first aspect, the obtaining a display frame rate of an application running in a foreground and a minimum refresh rate of the display screen includes: A refresh rate decision module of an application framework layer in the electronic device obtains the display frame rate of the application running in the foreground, and determines the minimum refresh rate based on display brightness of the display screen and brightness of ambient light; and the refresh rate decision module delivers the display frame rate to the display driver through the SF and an HWC, and delivers the minimum refresh rate to the display driver through a hardware abstract layer interface.

Due to a human vision problem, a user is more sensitive to a flickering phenomenon of the display screen in a case that display brightness is low or brightness of ambient light is low, and the flickering phenomenon is more obvious. Therefore, the refresh rate decision module determines the minimum refresh rate based on the display brightness and the brightness of ambient light, which may avoid a serious flickering phenomenon when the display brightness is low or the brightness of ambient light is low. In addition, a hardware abstract layer interface is added to deliver the minimum refresh rate, which can ensure that the display driver can obtain the display frame rate and the minimum refresh rate at the same time.

In another possible implementation of the first aspect, the determining the minimum refresh rate based on display brightness of the display screen and brightness of ambient light includes: when the display brightness is greater than or equal to 50 nits and the brightness of ambient light is greater than or equal to 50 luxes, determining that the minimum refresh rate is 10 Hz or 30 Hz; when the display brightness is greater than or equal to 300 nits and the brightness of ambient light is greater than or equal to 50 luxes, determining that the minimum refresh rate is 1 Hz; and when the display brightness is less than 50 nits or the brightness of ambient light is less than 50 luxes, determining that the minimum refresh rate is 60 Hz.

In another possible implementation of the first aspect, after the display driver integrated circuit refreshes an image to the display screen based on a refresh rate in the first-type refresh rate queue, the method further includes: When the SF resumes sending an image to the display driver, the display driver controls the display driver integrated circuit to refresh an image to the display screen based on the 1st refresh rate in the first-type refresh rate queue.

In another possible implementation of the first aspect, the display driver integrated circuit includes a first display driver integrated circuit with a TEI function; and the method further includes: when the display driver configures the first-type refresh rate queue for the first display driver integrated circuit, synchronously delivering an instruction to control the first display driver integrated circuit to disable a TE MASK function and control initialization of the TEI function.

In another possible implementation of the first aspect, the display driver integrated circuit includes a second display driver integrated circuit without a TEI function; and the method further includes: when the display driver configures the first-type refresh rate queue for the second display driver integrated circuit, synchronously delivering an instruction to control the second display driver integrated circuit to disable a TE MASK function, and reporting a TE signal generated by the second display driver integrated circuit to the SF based on an actual working frame rate of the SF.

In another possible implementation of the first aspect, the method further includes: when the display driver configures the second-type refresh rate queue for the display driver integrated circuit, synchronously delivering an instruction to control the display driver integrated circuit to enable a TE MASK function.

In another possible implementation of the first aspect, the configuring, by the display driver, a first-type refresh rate queue for a display driver integrated circuit of the electronic device in a case that the display frame rate is greater than the minimum refresh rate includes: In a case that the display frame rate is greater than the minimum refresh rate, and that the display frame rate is not equal to 120 Hz and the minimum refresh rate is not equal to 60 Hz, the display driver configures the first-type refresh rate queue for the display driver integrated circuit of the electronic device, where the 1st refresh rate in the first-type refresh rate queue is less than or equal to the display frame rate, a refresh rate following the 1st refresh rate is null, or the refresh rate following the 1st refresh rate is less than the display frame rate and is greater than or equal to the minimum refresh rate; and in a case that the display frame rate is greater than the minimum refresh rate, and that the display frame rate is equal to 120 Hz and the minimum refresh rate is equal to 60 Hz, the display driver configures a second-type refresh rate queue for the display driver integrated circuit of the electronic device, where a last refresh rate in the second-type refresh rate queue is equal to 60 Hz, and refresh rates preceding the last refresh rate are all null.

In another possible implementation of the first aspect, the display driver integrated circuit includes a first display driver integrated circuit with a TEI function, and a length of a refresh rate queue of the first display driver integrated circuit is 5; and the configuring, by the display driver, the first-type refresh rate queue for the first display driver integrated circuit includes: When the display frame rate is 120 Hz and the minimum refresh rate is 30 Hz, or when the display frame rate is 60 Hz and the minimum refresh rate is 30 Hz, the 1st refresh rate in the first-type refresh rate queue is set to 60 Hz, the last refresh rate is set to 30 Hz, and a remaining refresh rate is set to null; when the display frame rate is 120 Hz and the minimum refresh rate is 10 Hz, or when the display frame rate is 60 Hz and the minimum refresh rate is 10 Hz, the 1st refresh rate in the first-type refresh rate queue is set to 60 Hz, a 2nd refresh rate is set to 30 Hz, a 3rd refresh rate is set to 20 Hz, a 4th refresh rate is set to null, and a 5th refresh rate is set to 10 Hz; and when the display frame rate is 120 Hz and the minimum refresh rate is 1 Hz, or when the display frame rate is 60 Hz and the minimum refresh rate is 1 Hz, the 1st refresh rate in the first-type refresh rate queue is set to 60 Hz, the 2nd refresh rate is set to 30 Hz, the 3rd refresh rate is set to 20 Hz, the 4th refresh rate is set to 10 Hz, and the 5th refresh rate is set to 1 Hz.

In another possible implementation of the first aspect, the display driver integrated circuit includes a second display driver integrated circuit without a TEI function, and a length of a refresh rate queue of the second display driver integrated circuit is 4; and the configuring, by the display driver, the first-type refresh rate queue for the second display driver integrated circuit includes: When the display frame rate is 120 Hz and the minimum refresh rate is 30 Hz, or when the display frame rate is 60 Hz and the minimum refresh rate is 30 Hz, the 1st refresh rate in the first-type refresh rate queue is set to 60 Hz, the last refresh rate is set to 30 Hz, and a remaining refresh rate is set to null; when the display frame rate is 120 Hz and the minimum refresh rate is 10 Hz, or when the display frame rate is 60 Hz and the minimum refresh rate is 10 Hz, the 1st refresh rate in the first-type refresh rate queue is set to 60 Hz, a 2nd refresh rate is set to 30 Hz, a 3rd refresh rate is set to null, and a 4th refresh rate is set to 10 Hz; and when the display frame rate is 120 Hz and the minimum refresh rate is 1 Hz, or when the display frame rate is 60 Hz and the minimum refresh rate is 1 Hz, the 1st refresh rate in the first-type refresh rate queue is set to 60 Hz, the 2nd refresh rate is set to 30 Hz, the 3rd refresh rate is set to 10 Hz, and the 4th refresh rate is set to 1 Hz.

In another possible implementation of the first aspect, to exclude some cases in which it is not appropriate to configure a refresh rate queue, before configuring a first-type refresh rate queue for a display driver integrated circuit of the electronic device in a case that the display frame rate is greater than the minimum refresh rate, or configuring a second-type refresh rate queue for the display driver integrated circuit in a case that the display frame rate is equal to the minimum refresh rate, the method further includes: The display driver determines that a display screen corresponding to the display driver integrated circuit has been initialized, and that the display screen is not currently in an always on display mode or a text-based user interface mode.

In another possible implementation of the first aspect, the application includes at least two types of running scenarios, and display frame rates of the application in a plurality of running scenarios of the at least two types of running scenarios are different. The obtaining, by a display driver of the electronic device, a display frame rate of an application running in a foreground includes: The display driver obtains a display frame rate of the application in a current running scenario. In this implementation, when the display driver configures a refresh rate queue for the display driver integrated circuit, not only display frame rates of different applications may be used as a basis, but also a current running scenario of an application is taken into account. In this way, a refresh rate queue that better meets an actual running status of the electronic device may be configured for the display driver integrated circuit, which is conducive to reducing power consumption of the electronic device.

According to a second aspect, this application provides an electronic device, and a plurality of applications are installed in the electronic device. The electronic device includes a display screen, a memory, a display driver integrated circuit, and one or more processors. The display screen, the memory, and the display driver integrated circuit are coupled to the processor. The memory stores one or more pieces of computer program code, and the computer program code includes computer instructions. When the processor executes the computer instructions, the electronic device is enabled to perform the following steps: A display driver obtains a display frame rate of an application running in a foreground and a minimum refresh rate of the display screen; the display driver configures a first-type refresh rate queue for a display driver integrated circuit of the electronic device in a case that the display frame rate is greater than the minimum refresh rate, where the first-type refresh rate queue includes at least two refresh rates that are arranged from high to low, and each of the refresh rates is greater than or equal to the display frame rate and less than or equal to the minimum refresh rate; the display driver controls the display driver integrated circuit to refresh an image to the display screen based on a 1st refresh rate in the first-type refresh rate queue; and in a case that an SF of the electronic device does not send an image to the display driver, the display driver controls, based on a rank order of refresh rates in the first-type refresh rate queue, the display driver integrated circuit to refresh an image to the display screen based on a next refresh rate in the first-type refresh rate queue.

In a possible implementation of the second aspect, when the computer instructions are executed by the processor, the electronic device is enabled to further perform the following steps: The display driver configures a second-type refresh rate queue for the display driver integrated circuit of the electronic device in a case that the display frame rate is equal to the minimum refresh rate, where a last refresh rate in the second-type refresh rate queue is equal to the display frame rate, and refresh rates preceding the last refresh rate are all null; and the display driver controls the display driver integrated circuit to refresh an image to the display screen based on the last refresh rate in the second-type refresh rate queue.

In a possible implementation of the second aspect, when the computer instructions are executed by the processor, the electronic device is enabled to further perform the following steps: A refresh rate decision module of an application framework layer in the electronic device obtains the display frame rate of the application running in the foreground, and determines the minimum refresh rate based on display brightness of the display screen and brightness of ambient light; and the refresh rate decision module delivers the display frame rate to the display driver through the SF and an HWC, and delivers the minimum refresh rate to the display driver through a hardware abstract layer interface.

In a possible implementation of the second aspect, when the computer instructions are executed by the processor, the electronic device is enabled to further perform the following steps: When the display brightness is greater than or equal to 50 nits and the brightness of ambient light is greater than or equal to 50 luxes, that the minimum refresh rate is 10 Hz or 30 Hz is determined; when the display brightness is greater than or equal to 300 nits and the brightness of ambient light is greater than or equal to 50 luxes, that the minimum refresh rate is 1 Hz is determined; and when the display brightness is less than 50 nits or the brightness of ambient light is less than 50 luxes, that the minimum refresh rate is 60 Hz is determined.

In a possible implementation of the second aspect, when the computer instructions are executed by the processor, the electronic device is enabled to further perform the following step: When the SF resumes sending an image to the display driver, the display driver controls the display driver integrated circuit to refresh an image to the display screen based on the 1st refresh rate in the first-type refresh rate queue.

In a possible implementation of the second aspect, when the computer instructions are executed by the processor, the electronic device is enabled to further perform the following step: When the display driver configures the first-type refresh rate queue for the first display driver integrated circuit, an instruction is synchronously delivered to control the first display driver integrated circuit to disable a TE MASK function and control initialization of the TEI function.

In a possible implementation of the second aspect, when the computer instructions are executed by the processor, the electronic device is enabled to further perform the following steps: When the display driver configures the first-type refresh rate queue for the second display driver integrated circuit, an instruction is synchronously delivered to control the second display driver integrated circuit to disable a TE MASK function, and a TE signal generated by the second display driver integrated circuit is reported to the SF based on an actual working frame rate of the SF.

In a possible implementation of the second aspect, when the computer instructions are executed by the processor, the electronic device is enabled to further perform the following step: When the display driver configures the second-type refresh rate queue for the display driver integrated circuit, an instruction is synchronously delivered to control the display driver integrated circuit to enable a TE MASK function.

In a possible implementation of the second aspect, when the computer instructions are executed by the processor, the electronic device is enabled to further perform the following steps: In a case that the display frame rate is greater than the minimum refresh rate, and that the display frame rate is not equal to 120 Hz and the minimum refresh rate is not equal to 60 Hz, the display driver configures the first-type refresh rate queue for the display driver integrated circuit of the electronic device, where the 1st refresh rate in the first-type refresh rate queue is less than or equal to the display frame rate, a refresh rate following the 1st refresh rate is null, or the refresh rate following the 1st refresh rate is less than the display frame rate and is greater than or equal to the minimum refresh rate; and in a case that the display frame rate is greater than the minimum refresh rate, and that the display frame rate is equal to 120 Hz and the minimum refresh rate is equal to 60 Hz, the display driver configures a second-type refresh rate queue for the display driver integrated circuit of the electronic device, where a last refresh rate in the second-type refresh rate queue is equal to 60 Hz, and refresh rates preceding the last refresh rate are all null.

In a possible implementation of the second aspect, when the computer instructions are executed by the processor, the electronic device is enabled to further perform the following steps: When the display frame rate is 120 Hz and the minimum refresh rate is 30 Hz, or when the display frame rate is 60 Hz and the minimum refresh rate is 30 Hz, the 1st refresh rate in the first-type refresh rate queue is set to 60 Hz, the last refresh rate is set to 30 Hz, and a remaining refresh rate is set to null; when the display frame rate is 120 Hz and the minimum refresh rate is 10 Hz, or when the display frame rate is 60 Hz and the minimum refresh rate is 10 Hz, the 1st refresh rate in the first-type refresh rate queue is set to 60 Hz, a 2nd refresh rate is set to 30 Hz, a 3rd refresh rate is set to 20 Hz, a 4th refresh rate is set to null, and a 5th refresh rate is set to 10 Hz; and when the display frame rate is 120 Hz and the minimum refresh rate is 1 Hz, or when the display frame rate is 60 Hz and the minimum refresh rate is 1 Hz, the 1st refresh rate in the first-type refresh rate queue is set to 60 Hz, the 2nd refresh rate is set to 30 Hz, the 3rd refresh rate is set to 20 Hz, the 4th refresh rate is set to 10 Hz, and the 5th refresh rate is set to 1 Hz.

In a possible implementation of the second aspect, when the computer instructions are executed by the processor, the electronic device is enabled to further perform the following steps: When the display frame rate is 120 Hz and the minimum refresh rate is 30 Hz, or when the display frame rate is 60 Hz and the minimum refresh rate is 30 Hz, the 1st refresh rate in the first-type refresh rate queue is set to 60 Hz, the last refresh rate is set to 30 Hz, and a remaining refresh rate is set to null; when the display frame rate is 120 Hz and the minimum refresh rate is 10 Hz, or when the display frame rate is 60 Hz and the minimum refresh rate is 10 Hz, the 1st refresh rate in the first-type refresh rate queue is set to 60 Hz, a 2nd refresh rate is set to 30 Hz, a 3rd refresh rate is set to null, and a 4th refresh rate is set to 10 Hz; and when the display frame rate is 120 Hz and the minimum refresh rate is 1 Hz, or when the display frame rate is 60 Hz and the minimum refresh rate is 1 Hz, the 1st refresh rate in the first-type refresh rate queue is set to 60 Hz, the 2nd refresh rate is set to 30 Hz, the 3rd refresh rate is set to 10 Hz, and the 4th refresh rate is set to 1 Hz.

In a possible implementation of the second aspect, when the computer instructions are executed by the processor, the electronic device is enabled to further perform the following step: The display driver determines that a display screen corresponding to the display driver integrated circuit has been initialized, and that the display screen is not currently in an always on display mode or a text-based user interface mode.

In another possible implementation of the second aspect, the application includes at least two types of running scenarios, and display frame rates of the application in a plurality of running scenarios of the at least two types of running scenarios are different. When the computer instructions are executed by the processor, the electronic device is enabled to further perform the following step: The display driver obtains a display frame rate of the application in a current running scenario.

According to a third aspect, this application provides a computer-readable storage medium. The computer-readable storage medium stores a computer program, and when the computer program is executed by a processor of an electronic device, the electronic device is enabled to perform the image display method according to the first aspect and any possible design manner of the first aspect.

According to a fourth aspect, this application provides a computer program product, and when the computer program product runs on a computer, the computer is enabled to perform the method according to the first aspect and any possible design manner of the first aspect. The computer may be the foregoing electronic device.

It may be understood that, for beneficial effects that can be achieved by the electronic device according to any one of possible design manners of the second aspect, the computer-readable storage medium according to the third aspect, and the computer program product according to the fourth aspect provided above, refer to the beneficial effects in the first aspect and any possible design manner of the first aspect. Details are not described herein again.

### BRIEF DESCRIPTION OF DRAWINGS

FIG. 1 is a schematic diagram of a refresh rate corresponding to an image refreshing manner according to an embodiment of this application;
FIG. 2 is a schematic diagram of an interface of a video scenario with a bullet-screen comment according to an embodiment of this application;
FIG. 3 is a schematic diagram of an interface of a video scenario without a bullet-screen comment according to an embodiment of this application;
FIG. 4 is a schematic diagram of a DDIC refreshing an image repeatedly according to an embodiment of this application;
FIG. 5 is a schematic diagram of a structure of an electronic device according to an embodiment of this application;
FIG. 6 is a block diagram 1 of a software structure of an electronic device according to an embodiment of this application;
FIG. 7 is a schematic flowchart of an image display method according to an embodiment of this application;
FIG. 8 is a schematic diagram of layer interaction of a system of an image display method according to an embodiment of this application;
FIG. 9 is a block diagram 2 of a software structure of an electronic device according to an embodiment of this application; and
FIG. 10 is a schematic diagram of a chip system according to an embodiment of this application.

### DESCRIPTION OF EMBODIMENTS

To clearly describe the technical solutions in the embodiments of this application, the following briefly describes and explains some terms and technologies in the embodiments of this application.

A frame rate (frame rate), also referred to as a frame rate, is a rate at which a bitmap image in a unit of frame (Frame) is continuously displayed on a display screen. Generally, a frame per second (frame per second, FPS) is used as a unit.

A refresh rate is a quantity of times that a picture on a screen is refreshed per second, and may also be referred to as a frame rate of a display screen in a unit of Hz. For example, a refresh rate of 60 Hz means that the picture on the display screen can be refreshed and displayed 60 times within 1 second. That is, the refresh rate is a hardware performance parameter of the display screen of the electronic device, and is used to represent a quantity of times that the picture on the display screen can be refreshed and displayed per second.

A display frame rate of an application refers to a speed at which the application draws a picture (namely, image data). The display frame rate of the application generally may be represented by using a quantity of transmitted image frames per second (frame per second, fps). That is, the display frame rate of the application is a rate at which the application outputs image data to the display screen.

A tearing effect (tearing effect, TE) signal is a signal that is generated by a DDIC and that is used to prevent a tearing phenomenon when a picture is refreshed in an image display process. The tear phenomenon is a phenomenon that a part of a new picture and a part of an old picture are displayed when a picture is refreshed.

An adaptive refresh rate technology dynamically adjusts a refresh rate of a screen based on a use scenario (running scenario of an APP) and a requirement of a user.

Sending an image means writing, by an application processor (application processor, AP) side, drawn and rendered image data to be displayed into a random access memory (random access memory, RAM) of the DDIC through a surface flinger (surface flinger, SF).

Refreshing an image means reading, by the DDIC, the image data to be displayed from the RAM based on a refresh rate, and refreshing and displaying the image data to be displayed to a corresponding display screen.

The following clearly and completely describes the technical solutions in the embodiments of this application with reference to the accompanying drawings in the embodiments of this application. In description of the embodiments of this application, terms used in the following embodiments are merely intended to describe particular embodiments, and are not intended to limit this application. In addition, for ease of clearly describing the technical solutions in the embodiments of this application, in the embodiments of this application, words such as "first" and "second" are used to distinguish same items or similar items whose functions and roles are basically the same. A person skilled in the art may understand that the words such as "first" and "second" do not limit a quantity or an execution queue, and the words such as "first" and "second" do not indicate a definite difference. In the descriptions of the embodiments of this application, unless otherwise specified, "a plurality of" means two or more.

With continuous development of a display screen technology of an electronic device (for example, a mobile phone), more display screens that can support a plurality of refresh rates emerge. For example, a display screen that uses a low temperature polycrystalline oxide (low temperature polycrystalline oxide, LTPO) screen technology may support a plurality of refresh rates such as 120 Hz, 90 Hz, 60 Hz, 40 Hz, 30 Hz, 10 Hz, and 1 Hz. 120 Hz and 90 Hz are base frequencies of the LTPO, and other refresh rates that may be supported are generated in a frameskip (frameskip) manner based on 120 Hz, so that a refresh rate of 1 Hz may be achieved at a minimum.

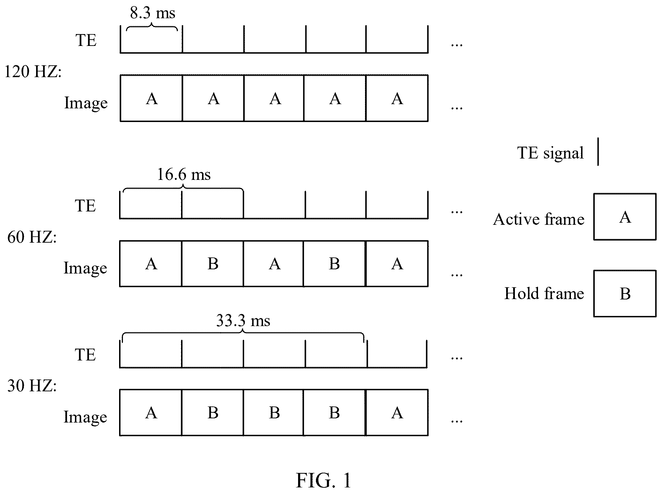

For example, a refresh rate of 120 Hz indicates that a picture of the display screen can be refreshed 120 times within 1 second. Therefore, 120 Hz means refreshing one frame of image by using 8.3 ms (milliseconds) as one period, and an image in each period is an active (active) frame. Refer to an illustration corresponding to 120 Hz in FIG. 1. The active frame may be understood as an image frame sent by an upper-layer SF to a lower-layer DDIC.

In this case, a principle of achieving a refresh rate of 60 Hz based on 120 Hz is that the 8.3 ms is still used as one period, but each active frame is followed by one hold frame. The hold frame means that the DDIC keeps one frame of image not to be refreshed after one active frame is refreshed. It may be understood that the hold frame has no corresponding image content. That is, at the refresh rate of 60 Hz, one active frame is available every 16.6 milliseconds. Refer to an illustration corresponding to 60 Hz in FIG. 1. It can be learned from the foregoing description that, compared with refreshing one active frame in one period of 8.3 ms, the DDIC implements frameskip in a manner of refreshing one frame of image and stopping one frame of image (commonly referred to as scanning-one-stopping-one), which extends an image refreshing time interval between two active frames is increased by half, thereby achieving a refresh rate of 60 Hz on the basis of 120 Hz.

Similarly, it can be learned that achieving 30 Hz on the basis of 120 Hz means that each active frame is followed by 3 hold frames, which is commonly referred to as scanning-one-stopping-three. Refer to an illustration corresponding to 30 Hz in FIG. 1. Achieving 10 Hz at 120 Hz means that each active frame is followed by 11 hold frames, which is commonly referred to as scanning-one-stopping-eleven. Achieving 1 Hz at 120 Hz means that each active frame is followed by 119 hold frames, which is commonly referred to as scanning-one-stopping-one hundred and nineteen.

A higher refresh rate of a display screen represents a higher display frame rate that may be supported by the display screen, and smoother display of a corresponding picture. A lower refresh rate of the display screen represents a lower display frame rate that can be supported by the display screen, but represents more power consumption that may be saved. Therefore, to ensure a smooth picture and save specific power consumption as much as possible, an adaptive refresh rate technology appears at present.

That is, generally in a process of running a high frame rate application or a sliding operation, the display screen is adaptively set to a high refresh rate by delivering a refresh rate switching instruction to the DDIC. On the contrary, in a process of running a low frame rate application, the display screen is adaptively set to a low refresh rate by delivering a refresh rate switching instruction to the DDIC.

For example, if it is detected that a current running scenario of an APP in the electronic device is a high frame rate game scenario or a fast sliding scenario, to improve smoothness of a game picture or picture sliding, a display driver (display driver) delivers a refresh rate switching instruction to the DDIC to switch a refresh rate of the display screen to a high refresh rate that can match the high frame rate game scenario or the fast sliding scenario. Assuming that a current refresh rate of the display screen is 60 Hz, when it is detected that the running scenario of the APP has changed and the refresh rate needs to be increased (for example, running a high frame rate game), the display driver may deliver a refresh rate switching instruction to the DDIC to switch the refresh rate to 120 Hz. When it is detected that the running scenario of the APP has changed and the refresh rate needs to be reduced (for example, exiting a high frame rate game), the display driver may deliver a refresh rate switching instruction again to the DDIC to switch the refresh rate from 120 Hz back to 60 Hz.

It can be learned from the foregoing description that, compared with a conventional display screen that can support only one refresh rate, the display screen that can support a plurality of refresh rates may adapt to running scenarios of more APPs based on an actual application situation, thereby ensuring a smooth picture and reducing power consumption.

However, most APPs are developed by a third party currently, and are configured in a download and installation manner to an electronic device to run. Therefore, there is a problem of adaptability between an electronic device and an APP. In a case that adaptability is high, an upper layer of the electronic device can well distinguish running scenarios of the APP, and thus can directly deliver a refresh rate switching instruction based on a running scenario to control a lower-layer DDIC to switch to a refresh rate that matches the running scenario, to implement an adaptive refresh rate technology.

However, in a case that adaptability between the electronic device and the APP is low, the upper layer of the electronic device may be unable to well distinguish running scenarios of the APP, and thus cannot accurately deliver a refresh rate switching instruction to the lower-layer DDIC based on a running scenario to switch to a refresh rate that matches the running scenario of the APP, resulting in increased power consumption. That is, the conventional adaptive refresh rate technology cannot be adapted to a case that the running scenario cannot be distinguished, and thus the refresh rate of the DDIC cannot be reduced in a case that the running scenario cannot be distinguished, thereby resulting in an increase in unnecessary power consumption.

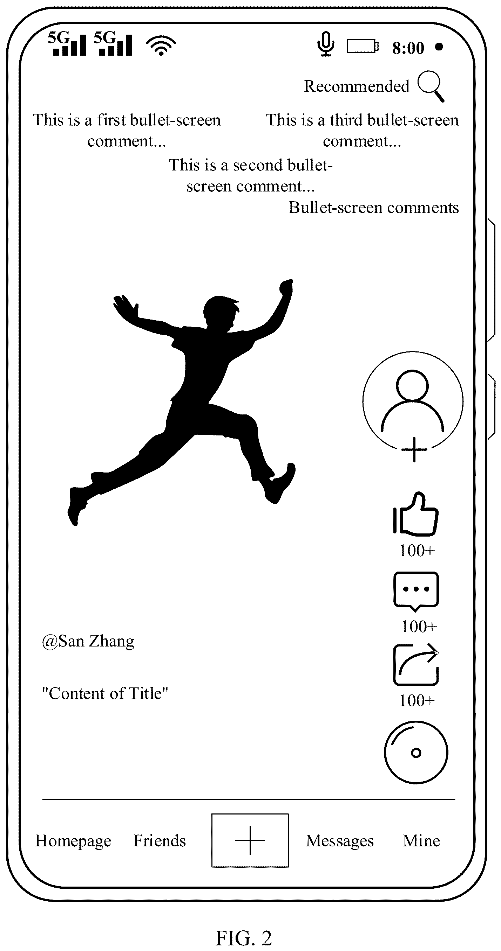

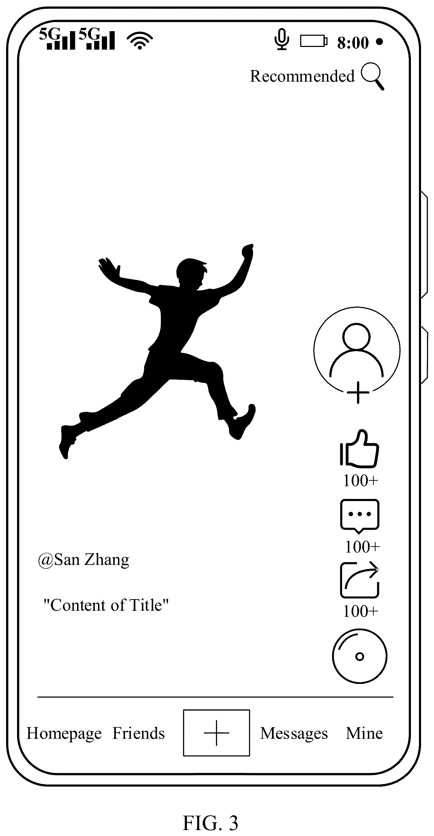

For example, a short video APP with a bullet-screen function is used. The short video APP is in a video play scenario with bullet-screen comments. Referring to FIG. 2, to ensure smoothness of the bullet-screen comments, a display frame rate required by the APP is generally 60 Hz. Correspondingly, the refresh rate of the display screen should be adapted to 60 Hz to synchronously maintain smoothness of display when the bullet-screen comments are run. However, in a video play scenario without bullet-screen comments, referring to FIG. 3, to reduce power consumption, the display frame rate of the APP is generally adapted to 30 Hz to ensure smoothness of video playback. Therefore, when the running scenario in the short video APP switches from a video with bullet-screen comments to a video without bullet-screen comments, an SF module on an AP side may reduce a drawing rate to 30 Hz based on the display frame rate of 30 Hz required by the short video APP. However, because of a background adaptability problem between the electronic device and the short video APP, it cannot be well distinguished whether a current video scenario has bullet-screen comments. Further, it is not possible to accurately deliver a refresh rate switching instruction for switching to a refresh rate of 30 Hz to the lower-layer DDIC when the running scenario of the short video APP is switched to a video without bullet-screen comments. As a result, after an upper-layer SF has reduced the drawing rate to 30 Hz, and an image sending frequency is caused to be correspondingly reduced to 30 Hz, the lower-layer DDIC still refreshes an image at a refresh rate of 60 Hz, increasing unnecessary power consumption. The following describes the foregoing problems with reference to a process in which the SF draws and sends an image, and the DDIC refreshes an image.

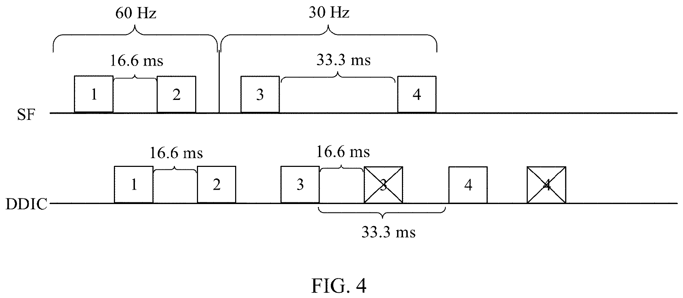

Referring to FIG. 4, rectangles marked with numbers 1, 2, 3, and 4 respectively represent a first frame of image, a second frame of image, a third frame of image, and a fourth frame of image. The first frame of image and the second frame of image are images drawn at a display frame rate of 60 Hz (corresponding to the video scenario with bullet-screen comments of the short video APP). That is, for each of the two frames of images, namely, the first frame of image and the second frame of image, a time interval between drawing/sending an image and refreshing/displaying an image is two periods, that is, 16.6 ms. When the short video APP switches to a video scenario without bullet-screen comments, the SF reduces the drawing rate to 30 Hz to meet a requirement for a display frame rate of 30 Hz required by the video scenario without bullet-screen comments, and completes image drawing and sending of the third frame of image and the fourth frame of image at a rate of 30 Hz. That is, for each of the two frames of images, namely, the third frame of image and the fourth frame of image, a time interval between drawing/sending an image and refreshing/displaying an image is four periods, that is, 33.3 ms. However, in this case, because the upper layer of the electronic device cannot distinguish a scenario and deliver an instruction for switching to a refresh rate of 30 Hz to the DDIC, the DDIC still uses a refresh rate of 60 Hz to refresh an image. Therefore, in a gap in which the upper-layer SF does not send an image, because no new image (active frame) is transmitted, a case that the DDIC repeatedly refreshes the third frame of image and the fourth frame of image (rectangles with diagonal lines in the figure), thereby increasing unnecessary power consumption.

To resolve a problem that unnecessary power consumption increases due to a failure to distinguish a running scenario of an APP, and a failure to accurately deliver a refresh rate switching instruction to the DDIC to reduce the refresh rate, an embodiment of this application provides a new refresh rate adaptation method.

The refresh rate adaptation method provided in this embodiment of this application is applied to an electronic device. A main implementation principle is as follows: An upper layer of the electronic device dynamically configures a refresh rate queue SEQ in which refresh rates are distributed from high to low for a DDIC based on a data structure of a queue (sequeue, SEQ) that is in the DDIC and that is used to configure the refresh rates. Then, a display driver controls the DDIC to refresh an image to the display screen based on the configured refresh rate queue SEQ. That is, in an image display process, the display driver can deliver a refresh rate switching instruction to the DDIC based on an image sending frequency of an SF module on an upper-layer AP side to control the DDIC to switch a refresh rate in the configured refresh rate queue SEQ. When the DDIC switches from a high refresh rate to a low refresh rate based on the image sending frequency, an adaptive reduction in the refresh rate is implemented, thereby achieving an effect of reducing unnecessary power consumption.

Specifically, the SEQ may be understood as a functional module that is in the DDIC and that is provided for a user to configure a refresh rate. Based on a type of the DDIC, a length that a queue thereof can support varies. That is, a length of the refresh rate queue SEQ configured for the DDIC depends on the type of the DDIC.

For example, two types of DDIC, model 37900 and model 37701A, which are currently most commonly used by the electronic device, are employed. A DDIC of model 37900 is a DDIC with a tearing interposition (tearing interposition, TEI) function (hereinafter referred to as a first DDIC), and a length of a queue that can be supported by the DDIC is 5. That is, a refresh rate queue SEQ of the first DDIC may include five queue values, which is equivalent to a SEQ of the first DDIC being equal to [SEQ1, SEQ2, SEQ3, SEQ4, and SEQ5]. A DDIC of model 37701A is a DDIC without a tearing interposition (tearing interposition, TEI) function (hereinafter referred to as a second DDIC), and a length of a queue that can be supported by the DDIC is 4. That is, a SEQ of the second DDIC may include four queue values, which is equivalent to a SEQ of the second DDIC being equal to [SEQ1, SEQ2, SEQ3, and SEQ4].

For example, the electronic device is a mobile phone. For a mobile phone with only a single display screen, the display screen may employ the DDIC of model 37701A or the DDIC of model 37900 based on an actual requirement. For a mobile phone that includes two display screens, for example, a foldable mobile phone, the first DDIC and/or the second DDIC may be selectively applied based on different requirements of an inner screen (a display screen for the user to operate when the foldable mobile phone is in an unfolded state) and an outer screen (a display screen for the user to operate when the foldable mobile phone is in a folded state). For example, the DDIC of model 37900 is generally applied to the existing inner screen, and the DDIC of model 37701A is generally applied to the existing outer screen.

The queue values in the refresh rate queue SEQ (for example, SEQ i, i = 1, 2...n, n = 4 or n = 5) may be set to different refresh rates. Different refresh rates correspond to different image refreshing manners. The DDIC refreshing an image based on the SEQ means refreshing an image in an image refreshing manner of the refresh rate corresponding to the SEQ, which is equivalent to working at the refresh rate. For example, if a queue value in the SEQ of the DDIC is set to a refresh rate of 60 Hz, when the DDIC works based on the queue value of 60 Hz, the DDIC refreshes an image in a manner of scanning-one-stopping-one, thereby achieving the refresh rate of 60 Hz. If the queue value in the SEQ is set to 30 Hz, when the DDIC works based on the queue value of 30 Hz, the DDIC refreshes an image in a manner of scanning-one-stopping-three, thereby achieving the refresh rate of 30 Hz. In addition, the SEQs i in the refresh rate queue SEQ may be switched based on an enqueuing order. Furthermore, it is restricted in the DDIC that the refresh rates SEQi in the refresh rate queue SEQ can only be switched successively based on a queuing order. It is also restricted that skipping switching is not allowed, but direct switching to SEQ1 is allowed. That is, the DDIC can only be switched from SEQ1 to SEQ2, from SEQ2 to SEQ3, but cannot be switched directly from SEQ1 to SEQ3, and even less from SEQ3 to SEQ1. However, it is possible to switch directly from SEQ3 or SEQ2 to SEQ1.

Based on this, to implement adaptive reduction of the refresh rate to save unnecessary power consumption in a case that a running scenario cannot be distinguished, the electronic device in this embodiment of this application may configure, through dynamic configuration, a refresh rate queue SEQ for the DDIC in which refresh rates are distributed from high to low. For example, a 1st refresh rate SEQ1 in the refresh rate queue SEQ is set to a high refresh rate, and other refresh rates are set to low refresh rates lower than the 1st refresh rate SEQ1.

For example, the SEQ of the first DDIC is used, that is, SEQ1 is set to a high refresh rate, and SEQ2, SEQ3, SEQ4, and SEQ5 are set to low refresh rates. For example, SEQ1 is set to 60 Hz, and SEQ2, SEQ3, SEQ4, and SEQ5 are set to 30 Hz.

Then, the DDIC refreshes an image based on the refresh rate queue SEQ that is configured for the DDIC by an upper-layer application based on a running scenario of the upper-layer application. A process of refreshing an image is as follows: The DDIC first works in a manner of refreshing an image corresponding to the 1st refresh rate SEQ1 in the queue. At the same time of refreshing an image, the display driver determines, based on a TE signal generated by the DDIC and reported to the upper-layer SF, whether the upper layer is sending an image stably.

In the display technology, generally, when the DDIC reports one TE signal, the DDIC obtains one frame of image sent from the upper layer. Therefore, if no corresponding image is obtained after the TE signal is reported, it indicates that the SF module may reduce the speed of drawing and sending an image based on a display frame rate of a running scenario of an APP (for example, in a case that the display frame rate required by the APP is reduced from 60 Hz to 30 Hz after bullet-screen comments have finished running or are disabled). That is, the upper-layer SF currently does not have a new image that needs to be sent for display, and therefore does not respond to the TE signal reported by the DDIC and thus does not implement image sending. In this case, if the DDIC still works based on a refresh rate corresponding to the SEQ1, a repeated image refreshing phenomenon occurs, thereby resulting in a problem of increasing unnecessary power consumption.

Therefore, in a case that the display driver determines, based on the TE signal, that the upper-layer SF does not send an image, the display driver controls the DDIC to switch to a next refresh rate based on a rank order of the refresh rates SEQi in the refresh rate queue SEQ, for example, switching from SEQ1 to SEQ2. Then the DDIC refreshes an image based on a refresh rate currently switched to, that is, if a specific SEQi is currently switched to, a refresh rate corresponding to the SEQi is used to refresh an image.

SEQ2, SEQ3, SEQ4, and SEQ5 are also switched in the same manner in a case that it is determined that the upper-layer SF does not send an image, till after switching to the last SEQ4 or SEQ5, the DDIC keeps refreshing an image at a refresh rate corresponding to the last SEQ4 or SEQ5.

However, after the DDIC reduces the refresh rate, a quantity of hold frames for refreshing an image by the DDIC increases. In addition, if the upper-layer SF resumes sending an image, the upper-layer SF still sends an image based on an original image sending frequency. That is, the image sending frequency after the SF resumes sending an image is higher than a refresh rate at which the DDIC currently refreshes an image. Therefore, in this case, if the upper layer resumes sending an image, an image sent may correspond to an active frame of the DDIC, or may correspond to a hold frame. However, the hold frame corresponds to a moment at which the DDIC does not refresh an image, and if an image sent by the SF corresponds to a hold frame, the DDIC may be unable to immediately respond and refresh an image, and thus a new image sent by the upper layer is not immediately displayed on the display screen. Therefore, to ensure that the DDIC can immediately respond to the image sent by the upper-layer SF and refresh an image, it is necessary to ensure that the image sent by the SF corresponds to an active frame of the DDIC. Therefore, in a case that it is specified that the DDIC can only switch to SEQ1 skippingly, the display driver needs to immediately control the DDIC to switch back to the 1st refresh rate SEQ1 when receiving the image sent by the SF.

In addition, in the display technology, the TE signal is generated by the DDIC, and the upper-layer SF generally sends an image based on the TE signal reported by a lower-layer display driver. That is, the image sending frequency of the upper-layer SF module is equivalent to a frequency of reporting the TE signal. Therefore, the frequency of reporting the TE signal by the display driver needs to be consistent with a working frame rate of the upper-layer SF module (a frame rate synchronization requirement of software).

When a refresh rate of a conventional DDIC is directly controlled by an upper layer, the frequency of reporting the TE signal by the conventional DDIC generally corresponds to a refresh rate currently used, thereby ensuring consistency with a frame rate of the upper layer. However, in this embodiment of this application, when the display driver controls the DDIC to implement, by using the configured refresh rate queue SEQ, adaptive reduction of the refresh rate, once the DDIC switches from a high refresh rate to a low refresh rate, a corresponding frequency of reporting the TE signal changes with the switching of the refresh rate. In a case that an upper layer just does not respond to the TE signal for sending an image, but actually does not reduce the working frame rate, if the TE signal is reported based on a switched-to low refresh rate, the frequency of reporting the TE signal is not synchronous with the working frame rate of the upper layer, which violates the frame rate synchronization requirement of the software.

Therefore, in this embodiment of this application, to meet the frame rate synchronization requirement of the software, in a process in which the DDIC performs adaptive reduction of the refresh rate by using the SEQ, the display driver needs to synchronously control the DDIC to disable a TE MASK function, and report, based on the working frame rate of the upper-layer SF, the TE signal generated by the DDIC, that is, implementing a TE skipping function.

TE MASK is a function that is of the DDIC and that is used to shield the TE signal in the course of the refresh rate SEQi. In a case that the TE MASK function is enabled, the TE signal in the course of each SEQi is shielded, that is, TE signals corresponding to all the hold frames in the SEQi are shielded, and the shielded TE signals cannot be reported. In a case that the TE MASK function is disabled, the DDIC generates a TE signal based on a frequency of 120 Hz, and transmits the TE signal to the display driver for reporting to the upper-layer SF.

The TE skipping function is to report one TE signal to the SF every other TE signal, which is equivalent to skipping and not reporting some TE signals that need to be reported. A TE signal that is not reported may be referred to as a skipped TE signal. For example, after the TE MASK function is disabled, the DDIC generates the TE signal based on a frequency of 120 Hz. Therefore, when the working frame rate of the upper layer is 120 Hz, the display driver can directly report the TE signal generated by the DDIC to the upper-layer SF based on the frequency of 120 Hz without implementing the TE skipping function, so as to ensure that the frequency of reporting the TE is synchronized with a frame rate of software. When the working frame rate of the upper layer is not 120 Hz, the TE skipping function needs to be implemented, so that the frequency of reporting the TE signal is kept consistent with the working frame rate of the upper-layer SF, thereby meeting the frame rate synchronization requirement of the software.

An implementation of the TE skipping function is determined based on whether the DDIC has a TEI function (the DDIC has a hardware function for implementing the skipping of the TE). For a DDIC with the TEI function, for example, the first DDIC, because hardware of the first DDIC has the TEI function, the TE skipping function may be directly implemented through the TEI function of the DDIC. If the TE skipping function needs to be implemented, only an instruction needs to be delivered to the DDIC to control initialization of a register corresponding to the TEI function.

For a DDIC without the TEI function, for example, the second DDIC, because the TEI function is not configured in hardware of the second DDIC, the display driver mainly implements the TE skipping function through control by using a software program. That is, for the TE signal generated by the second DDIC, the display driver reports one TE signal every other TE signal to the upper-layer SF to implement the TE skipping function. For example, in a case that the working frame rate of the upper-layer SF is 60 Hz, a rate of reporting the TE signal also needs to be 60 Hz. After the TE MASK function is disabled, the TE signal cannot be reported to the upper-layer SF based on 120 Hz. On the basis of the DDIC generating the TE signal based on the refresh rate of 120 Hz, the display driver reports one TE signal every other TE signal to the upper-layer SF, so that the TE signal is reported at a rate of 60 Hz, thereby ensuring synchronization with the working frame rate of the upper layer.

It can be learned from the foregoing description that, by using this solution, after the display driver configures the refresh rate queue SEQ in which refresh rates are distributed from high to low for the DDIC in a case that the upper-layer SF does not send an image, the display driver controls the DDIC to switch from a high refresh rate to a low refresh rate, so that the DDIC adaptively reduces the refresh rate based on the image sending frequency of the upper layer. Therefore, in a case that the upper-layer SF does not send an image, the DDIC may be prevented from repeatedly refreshing an image, thereby reducing unnecessary power consumption. For example, it is assumed that a refresh rate corresponding to SEQ1 is 60 Hz, and a refresh rate corresponding to SEQ2 is 30 Hz. When the DDIC works at the refresh rate of 60 Hz corresponding to SEQ1, the display driver determines, by using the TE signal, that the image sending frequency of the upper-layer SF decreases. In this case, the display driver controls the DDIC to switch from SEQ1 to SEQ2. Correspondingly, the refresh rate at which the DDIC refreshes an image decreases from 60 Hz to 30 Hz. That is, an image refreshing manner of the DDIC is switched from "scanning-one-stopping-one" to "scanning-one-stopping-three", and thus a repeated image refreshing phenomenon shown in FIG. 4 may be avoided, thereby achieving an effect of reducing power consumption.

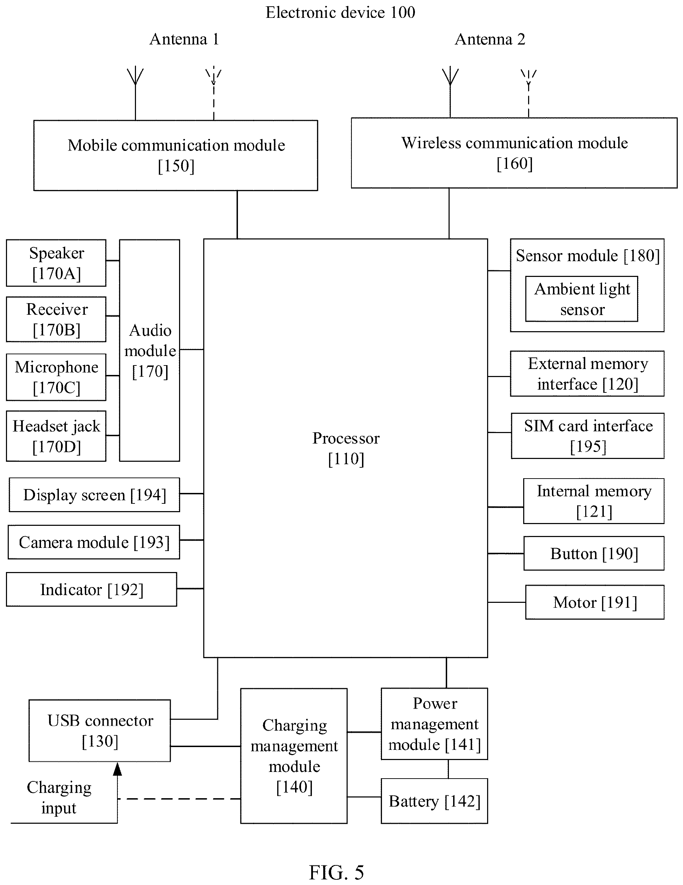

For example, referring to FIG. 5, FIG. 5 is a schematic diagram of a structure of an electronic device according to an embodiment of this application.

The electronic device 100 may include at least one of a mobile phone, a foldable electronic device (a foldable mobile phone), a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device 100 is not specifically limited in the embodiments of this application.

An electronic device 100 may include a processor 110, an external memory interface 120, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera module 193, a display screen 194, a subscriber identification module (subscriber identification module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The processor 110 may generate an operation control signal based on instruction operation code and a timing signal, to complete control of instruction fetching and instruction execution. Specifically, in this embodiment of this application, the processor 110 may control the lower-layer DDIC to configure the refresh rate queue SEQ for the DDIC, so as to implement a refresh rate adaptation method in this embodiment of this application.

A memory may be further disposed in the processor 110 to store instructions and data. In some embodiments, the memory in the processor 110 may be a cache memory. The memory may store instructions or data that has been used by the processor 110 or that is used at a high frequency. If the processor 110 needs to use the instructions or the data, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI) interface, a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as the touch sensor, the audio module, the wireless communication module, the display, and the camera through at least one type of the foregoing interfaces.

It may be understood that, an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and videos are stored in the external memory card. Alternatively, a file such as music or a video is transmitted from the electronic device to the external memory card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS). The processor 110 performs various functional methods or data processing of the electronic device 100 by running the instructions stored in the internal memory 121 and/or instructions stored in the memory disposed in the processor.

The charging management module 140 is configured to receive a charging input from the charger for charging the battery 142. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera module 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. The mobile communication module 150 may provide a solution for wireless communication that is applied to the electronic device 100 and that includes 2G/3G/4G/5G and the like.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), Bluetooth low energy (bluetooth low energy, BLE), an ultra wide band (ultra wide band, UWB), a global navigation satellite system (global navigation satellite system, GNSS), frequency modulation (frequency modulation, FM), a near field communication (near field communication, NFC) technology, an infrared (infrared, IR) technology, and the like.

In some embodiments, in the electronic device 100, the antenna 1 is coupled to the mobile communication module 150, and the antenna 2 is coupled to the wireless communication module 160, so that the electronic device 100 may communicate with a network and another electronic device by using a wireless communication technology.

The electronic device 100 may implement a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. In the embodiments of this application, the display panel may be an organic light-emitting diode (organic light-emitting diode, OLED), an active-matrix organic light emitting diode or active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like.

In some embodiments, the electronic device 100 may include one or more display screens 194. For actual requirements, different display screens may be controlled by different DDICs. For example, the electronic device 100 includes a first DDIC with a TEI function and a second DDIC without a TEI function. The first DDIC may control a first display screen, and the second DDIC may control a second display screen.

The electronic device 100 may implement a photographing function through the camera module 193, the ISP, the video codec, the GPU, the display screen 194, the application processor AP, the neural-network processing unit NPU, and the like.

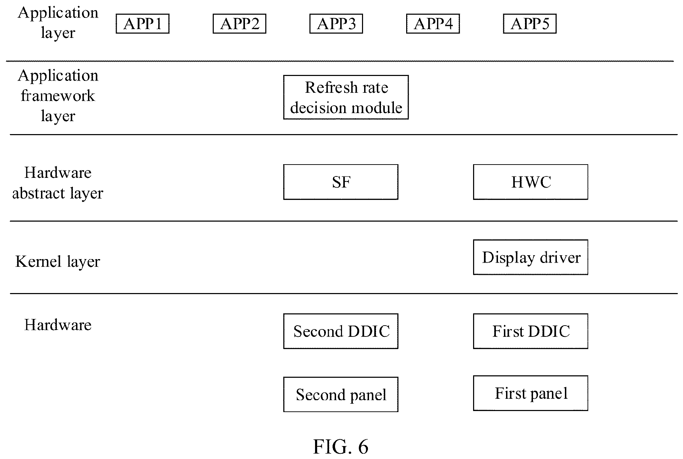

Referring to FIG. 6, FIG. 6 is a block diagram of a software structure of the electronic device 100 according to an embodiment of this application.

In a layered architecture, software is divided into several layers, and each layer has a clear role and task. The layers communicate with each other through software interfaces. In some embodiments, an Android system is divided into four layers from top to bottom: an application (applications) layer, an application framework (application framework) layer, a hardware abstract layer (Hardware Abstract Layer, HAL), and a kernel (kernel) layer.

The application layer may include a series of applications. The applications may include Home screen, Game, Camera, Gallery, Calendar, Phone, Map, Navigation, WLAN, Bluetooth, Music, Video, Messages, and the like.

The application framework layer provides an application programming interface (application programming interface, API) and a programming framework for an application at the application layer. The application framework layer includes some predefined functions. As shown in FIG. 6, the application framework layer in the embodiments of this application includes a refresh rate decision module.

The hardware abstract layer runs in user space (user space), encapsulates a driver at the kernel layer, and provides an invoking interface to an upper layer. As shown in FIG. 6, the hardware abstract layer in the embodiments of this application includes an SF and a hardware composer (hardware composer, HWC). The HWC has a function and a capability of combining and displaying image data by using hardware.

The kernel layer is a layer between hardware and software, as shown in FIG. 6. Specifically, in the embodiments of this application, the kernel layer includes at least a display driver. Hardware involved may include a DDIC and a display panel (panel). The display driver is configured to drive the DDIC to complete processing and implementation of display. For a foldable electronic device (for example, a foldable mobile phone that includes two display screens: an inner screen and an outer screen), FIG. 6 shows a first DDIC corresponding to the inner screen and a second DDIC corresponding to the outer screen, and a first panel and a second panel respectively corresponding to the first DDIC and the second DDIC.

Based on a principle of the foregoing refresh rate adaptation method, an embodiment of this application provides an image display method. The image display method is applied to an electronic device including a display screen and a plurality of applications installed therein. For a structure of the electronic device in this embodiment of this application, refer to FIG. 5. For a block diagram of a software structure, refer to FIG. 6. The following describes the image display method in the embodiments of this application by taking the electronic device as an example.

Specifically, the display driver of the electronic device obtains a display frame rate of an APP running in a foreground. The display frame rate is a frame rate required by a running scenario of the APP. The display frame rate may be obtained by the refresh rate decision module from the APP, and then delivered to the display driver through the SF and the HWC. In addition, different display screens can support different refresh rates, and different refresh rates bring different display effects to display. Therefore, when a refresh rate queue that can adaptively reduce a refresh rate is configured for the DDIC, to avoid a case that the refresh rate after adaptive reduction is not supported by the display screen or brings a poor display effect, in addition to considering that a frame rate required by the APP is met, performance of the display screen needs to be considered for setting each refresh rate in the queue.

Therefore, when obtaining the display frame rate of the APP, the display driver further needs to obtain a minimum refresh rate. The minimum refresh rate may be a minimum refresh rate that can be supported by a display screen in an electronic device. The minimum refresh rate may alternatively be a minimum refresh rate set based on a required display effect.

In a case that the display driver obtains the display frame rate of the APP and the minimum refresh rate, and determines that the display frame rate of the APP is greater than the minimum refresh rate, it represents that a condition for adapting from a high refresh rate to a low refresh rate is currently met. Therefore, the display driver may configure a first-type refresh rate queue for the DDIC. The first-type refresh rate queue is a refresh rate queue SEQ including at least two refresh rates, which are arranged from high to low. In addition, each refresh rate in the first-type refresh rate queue is greater than or equal to the display frame rate and less than or equal to the minimum refresh rate. For example, the first DDIC is used. When the display frame rate of the APP is equal to 120 Hz and the minimum refresh rate is equal to 10 Hz, the first-type refresh rate queue may be [120 Hz, 60 Hz, 30 Hz, 20 Hz, 10 Hz]. The second DDIC is used as an example, and the first-type refresh rate queue may be [120 Hz, 60 Hz, 30 Hz, 10 Hz]. In this embodiment of this application, the first-type refresh rate queue may also be referred to as an adaptive SEQ.

After the display driver configures the first-type refresh rate queue for the DDIC, the DDIC may be controlled to refresh an image based on the first-type refresh rate queue. The display driver first controls the DDIC to refresh an image to a corresponding display screen based on a 1st refresh rate SEQ1 in the first-type refresh rate queue. Then, in a case that the display driver determines, based on a reported TE signal, that the SF module does not send an image, the display driver controls, based on a rank order of refresh rates in the first-type refresh rate queue, the DDIC to refresh an image to the display screen based on a next refresh rate in the first-type refresh rate queue. That is, the DDIC is controlled to switch from the 1st refresh rate SEQ1 to a 2nd refresh rate SEQ2, and to refresh an image to the display screen based on the 2nd refresh rate SEQ2. Similarly, the display driver may control the DDIC again to switch to a 3rd refresh rate SEQ3 based on an image sending situation of the SF, and to refresh an image to the display screen based on the 3rd refresh rate SEQ3. If the DDIC has been controlled to refresh an image to the display screen based on the last refresh rate SEQ4 or SEQ5, it represents that the current refresh rate has decreased to the minimum refresh rate that can be supported by the display screen. If there is no situation of switching refresh rates, the DDIC keeps working based on the minimum refresh rate.

It can be learned from the foregoing description that, in the image display method provided in this embodiment of this application, the refresh rate of the DDIC is adaptively reduced based on the image sending frequency of the upper-layer SF. Therefore, in a case that the upper-layer SF does not send an image, the DDIC may be prevented from repeatedly refreshing an image, thereby reducing unnecessary power consumption and achieving an effect of saving power consumption.

In some embodiments, in a case that the display frame rate of the APP is equal to the minimum refresh rate, that is, in a case that the display frame rate required for the APP to run is equal to the minimum refresh rate that can be supported by the display screen, because a problem of smooth running of the APP and a problem of performance of the display screen cannot be ignored, in this case, the first-type refresh rate queue (adaptive SEQ) is not suitable to be configured for the DDIC, that is, in this case, a condition for adaptively reducing the refresh rate is not met. Therefore, the display driver configures a second-type refresh rate queue that cannot be adaptively reduced for the DDIC. The second-type refresh rate queue may also be referred to as a fixed SEQ. Only the last refresh rate SEQ4 or SEQ5 in this type of refresh rate queue is equal to the display frame rate of the APP, and the other refresh rates are null.

That is, in the first DDIC, SEQ1, SEQ2, SEQ3, and SEQ4 are null, and a refresh rate corresponding to SEQ5 is set to the display frame rate; and in the second DDIC, SEQ1, SEQ2, and SEQ3 are null, and a refresh rate corresponding to SEQ4 is set to the display frame rate. For example, assuming that the display frame rate of the APP = the minimum refresh rate = 60 Hz, in the first DDIC, SEQ1, SEQ2, and SEQ3 are null, and SEQ4 is set to 60 Hz; and in the second DDIC, SEQ1, SEQ2, SEQ3, and SEQ4 are null, and SEQ5 is set to 60 Hz.

A null SEQi in the refresh rate queue SEQ is directly skipped. Therefore, when the display driver controls the DDIC to refresh an image to the display screen by using the second-type refresh rate queue, it is equivalent to directly controlling the DDIC to refresh an image to the display screen by using the last refresh rate in the second-type refresh rate queue, indicating that the DDIC works based on a fixed refresh rate.

In addition, it should be understood that, because performance of an existing display screen is increasingly high, refresh rates that can be supported by the display screen are also increasingly high. In addition, there is a need to ensure that the APP runs smoothly, generally, the display frame rate required by the APP is not too low. Thus, currently, there is no case that the display frame rate of the APP is less than the minimum refresh rate. Therefore, when the display driver configures a refresh rate queue for the DDIC, the embodiments of this application exclude a case that the display frame rate of the APP is less than the minimum refresh rate.

In some embodiments, the minimum refresh rate may be a minimum refresh rate that can avoid a flickering phenomenon of the display screen. A light-emitting principle of a display screen that uses diodes to emit light (for example, an OLED, an AMOLED, and a FLED) is mainly implemented by applying power to the display screen, which is equivalent to charging the display screen once every time the display driver integrated circuit DDIC refreshes an image and displays corresponding image data on the display screen. Therefore, if the DDIC refreshes an image at a high refresh rate, because the refresh rate is high, and a frequency of image refreshing is high, a time interval between refreshing images is short, which is equivalent to the circuit keeping charging the display screen. In this case, brightness of the display screen can be kept at all times without dimming. However, if the DDIC switches to a low refresh rate, because the refresh rate is low, a corresponding frequency of image refreshing becomes low, a time interval between refreshing images becomes long, and in this period, the circuit may cause the display brightness to dim due to a physical phenomenon of a leakage current. For example, assuming that the DDIC adaptively reduces the refresh rate to 1 Hz based on the configured refresh rate queue, at a refresh rate of 1 Hz, the DDIC refreshes an image once every one second, which is equivalent to charging the display screen once every one second. During this interval of one second, it is obvious that there will be a leakage current situation causing the display screen to dim. After expiration of one second, the DDIC refreshes an image again to charge the display screen and the display screen becomes bright again. Thus, the display screen presents a flickering state alternated between bright and dim at 1 Hz.

Therefore, if the DDIC works at an excessively low refresh rate, the screen may present a flickering state alternated between bright and dim. In a conventional manner, the refresh rate of the DDIC is directly controlled by an upper layer. Therefore, if a flickering state occurs on the display screen because the refresh rate is excessively low, the upper layer may resolve this problem by using a switching instruction to control the DDIC to increase the refresh rate.

However, after the image display method in this embodiment of this application employs the refresh rate adaptation method provided in this embodiment of this application, because a main principle of the image display method is that the display driver controls the DDIC to adaptively reduce the refresh rate based on the refresh rate queue SEQ configured by the upper layer, the upper layer of the display driver in the electronic device cannot clearly learn an adaptive situation of a current refresh rate of the DDIC. That is, in an adaptive process of the DDIC, the upper layer cannot accurately learn a specific value of the current refresh rate after adaptive reduction, and thus cannot learn a flickering phenomenon caused by an excessively low refresh rate. Therefore, a conventional method that the upper layer controls the DDIC to increase the refresh rate to resolve a flickering problem caused by an excessively low refresh rate cannot adapt to the image display method in this embodiment of this application.

Based on this, to ensure synchronization of image display and brightness, the minimum refresh rate may be set under a condition that a flickering phenomenon does not occur on the display screen. For example, if the refresh rate of the display screen of the electronic device is less than 10 Hz, a flickering phenomenon tends to occur, and in this case, the minimum refresh rate may be set to 10 Hz. Subsequently, a refresh rate lower than 10 Hz does not occur in the refresh rate queue SEQ that the display driver configures for the DDIC based on the minimum refresh rate for display. The DDIC cannot switch to a refresh rate lower than 10 Hz, and thus a flickering problem during the display can be avoided.

In some embodiments, when the display driver configures the first-type refresh rate queue (adaptive SEQ) for the DDIC, to meet the frame rate synchronization requirement of the software, the display driver needs to synchronously deliver an instruction to control the DDIC to disable a TE MASK (TE MASK) function. In addition, based on the working frame rate of the upper layer, the frequency of reporting the TE signal generated by the DDIC is controlled to implement the TE skipping function. If the DDIC is the first DDIC with the TEI function, the display driver controls initialization of the TEI function of the first DDIC by delivering an instruction. If the DDIC is the second DDIC without the TEI function, the display driver reports the TE signal generated by the DDIC to the SF based on an actual working frame rate of the SF. That is, the display driver reports one TE signal to the SF every other TE signal.

In some embodiments, correspondingly, when the display driver configures the second-type refresh rate queue (fixed SEQ) for the DDIC, because the second-type refresh rate queue is a refresh rate queue that the DDIC is controlled to refresh an image to the display screen based on the fixed refresh rate, the display driver only needs to synchronously deliver an instruction to control the DDIC to enable the TE MASK (TE MASK function).

In some embodiments, considering that the DDIC works between some refresh rates with a slight difference, there is no significant impact on display. For example, when the refresh rate is switched from 120 Hz to 60 Hz, a problem of flickering and unsmoothness during display is not caused. Therefore, when the display driver configures the first-type refresh rate queue for the DDIC, to reduce power consumption as much as possible, the first-type refresh rate queue with the minimum power consumption may be configured based on an actual display frame rate and the minimum refresh rate.

Based on this, in a case that the display frame rate is greater than the minimum refresh rate, the configuring, by the display driver, the first-type refresh rate queue for the display driver integrated circuit of the electronic device includes: In a case that the display frame rate is greater than the minimum refresh rate, and that the display frame rate is not equal to 120 Hz and the minimum refresh rate is not equal to 60 Hz, the display driver configures the first-type refresh rate queue for the display driver integrated circuit of the electronic device. In the first-type refresh rate queue, the 1st refresh rate is less than or equal to the display frame rate, and a refresh rate following the 1st refresh rate is null, or a refresh rate following the 1st refresh rate is less than the display frame rate and is greater than or equal to the minimum refresh rate. In a case that the display frame rate is greater than the minimum refresh rate, and that the display frame rate is equal to 120 Hz and the minimum refresh rate is equal to 60 Hz, the display driver configures the second-type refresh rate queue for the display driver integrated circuit of the electronic device. In the second-type refresh rate queue, the last refresh rate is equal to 60 Hz, and a refresh rate preceding the last refresh rate is null.

That is, in a case that the display frame rate of the APP is greater than the minimum refresh rate, and that the display frame rate is not equal to 120 Hz and the minimum refresh rate is not equal to 60 Hz, a refresh rate corresponding to SEQ1 of the SEQ in the first DDIC is greater than or equal to the display frame rate of the APP, and refresh rates of SEQ2, SEQ3, SEQ4, and SEQ5 may be null, or may be less than the display frame rate of the APP and greater than or equal to the minimum refresh rate. Similarly, a refresh rate corresponding to SEQ 1 of the SEQ in the second DDIC is greater than or equal to the display frame rate of the APP, and refresh rates of SEQ2, SEQ3, and SEQ4 may be null, or may be less than the display frame rate of the APP and greater than or equal to the minimum refresh rate. However, in a case that the display frame rate of the APP is greater than the minimum refresh rate, but the display frame rate is equal to 120 Hz and the minimum refresh rate is equal to 60 Hz, the second-type refresh rate queue whose last refresh rate is equal to 60 Hz may be directly configured for the DDIC.

That is, when the display frame rate of the APP is equal to 120 Hz and the minimum refresh rate is equal to 60 Hz, the refresh rate queue of the first DDIC is SEQ=[\, \, \, \, 60 Hz]. The refresh rate queue of the second DDIC is SEQ=[\, \, \, 60 Hz]. "\" indicates null. When the refresh rate corresponding to SEQi to which the DDIC currently switches is null "\", the DDIC may directly switch to the next refresh rate in queue. Therefore, when the second-type refresh rate queue is configured for the DDIC, it indicates that the display driver directly controls the DDIC to refresh an image to the display screen based on the last refresh rate. As described above, it indicates that the display driver directly controls the first DDIC and the second DDIC to refresh an image to the display screen based on 60 Hz.

In some embodiments, because different models of DDIC can support different lengths of queues, and considering that power consumption is reduced as much as possible without affecting a display effect, this embodiment of this application provides, based on different DDICs, a refresh rate queue in which the display frame rate and the minimum refresh rate may be specifically configured. As shown in the following Table 1, the following Table 1 includes refresh rate queues of the first DDIC and the second DDIC.

**Table 1: Refresh rate queues**

| Queue number | Display frame rate of an APP -> minimum refresh rate | Refresh rate queue of the first DDIC (SEQ1, SEQ2, SEQ3, SEQ4, SEQ5) | Refresh rate queue of the second DDIC (SEQ1, SEQ2, SEQ3, SEQ4) |
|---|---|---|---|
| 1 | 120 Hz->60 Hz | \, \, \, \, 60 Hz | \, \, \ 60 Hz |
| 2 | 120 Hz->30 Hz | 60 Hz(3), \, \, \, 30 Hz | 60(3), \, \, 30 Hz |
| 3 | 120 Hz->10 Hz | 60 Hz(3), 30 Hz (3), 20 Hz(3), \, 10 Hz | 60 Hz(3), 30 Hz(3), \, 10 Hz |
| 4 | 120 Hz->1 Hz | 60 Hz(3), 30 Hz(3), 20 Hz(3), 10 Hz(3), 1 Hz | 60 Hz(3), 30 Hz(3), 10 Hz(3), 1 Hz |
| 5 | 90 Hz->90 Hz | \, \, \, \, 90 Hz | \, \, \, 90 Hz |
| 6 | 60 Hz->60 Hz | \, \, \, \, 60 Hz | \, \, \, 60 Hz |
| 7 | 60 Hz->30 Hz | 60 Hz, \, \, \, 30 Hz | 60, \, \, 30 Hz |
| 8 | 60 Hz->10 Hz | 60 Hz, 30 Hz(3), 20 Hz(3), \, 10 Hz | 60 Hz, 30 Hz(3), \, 10 Hz |
| 9 | 60 Hz->1 Hz | 60 Hz, 30 Hz(3), 20 Hz(3), 10 Hz(3), 1 Hz | 60 Hz, 30 Hz(3), 10 Hz(3), 1 Hz |
| 10 | 30 Hz->30 Hz | \, \, \, \, 30 Hz | \, \, \, 30 Hz |

"\" indicates null, and "(n)" following the refresh rate unit "Hz" indicates that the refresh rate is maintained for n times. Image refreshing manners corresponding to different refresh rates are different. Maintaining the refresh rate for n times means refreshing an image for n times in an image refreshing manner corresponding to the refresh rate. Correspondingly, a quantity of image refreshing frames corresponding to maintaining for n times is equal to a product of a quantity of image refreshing frames corresponding to the refresh rate and n.

"(3)" shown in Table 1 is used as an example. That is, when the DDIC determines that the refresh rate may be adaptively reduced from 60 Hz to 30 Hz, the DDIC may not perform switching immediately, but continues to maintain 60 Hz for three times before switching to 30 Hz. At the refresh rate of 60 Hz, the image refreshing manner is scanning-one-stopping-one. That is, normally, at 60 Hz, a total of two frames of images need to be gone through, namely, one active frame and one hold frame, as shown in the illustration corresponding to 60 Hz in FIG. 1. Therefore, the DDIC may perform scanning-one-stopping-one image refreshing for three times, going through a total of six frames of images (three active frames and three hold frames) before switching from 60 Hz to 30 Hz.

By maintaining the refresh rate for a specific quantity of times before switching the refresh rate, a flickering problem during display caused by the refresh rate switching can be avoided as much as possible. It should be understood that "(3)" shown in Table 1 is used as an example. A larger value of n indicates a lighter flickering phenomenon, but indicates higher power consumption. Therefore, the value of n may be set based on an actual situation, and is not limited to 3 in this embodiment of this application.

It can be learned from the foregoing Table 1 that a refresh rate queue corresponding to queue numbers 2, 3, 4, 7, 8, and 9 is the first-type refresh rate queue, and a refresh rate queue corresponding to queue numbers 1, 5, 6, and 10 is the second-type refresh rate queue. When the refresh rate is directly reduced from 120 Hz to 60 Hz, the displayed picture does not flicker. Therefore, when the display frame rate is 120 Hz and the minimum refresh rate is 60 Hz, a refresh rate queue correspondingly configured for the DDIC may be directly configured as the second-type refresh rate queue with a fixed refresh rate of 60 Hz (corresponding to queue number 1). Similarly, when the display frame rate is 120 Hz and the minimum refresh rate is less than 60 Hz, and the first-type refresh rate queue is configured for the DDIC, the 1st refresh rate (SEQ1) may not be set to 120 Hz, but directly set to 60 H (corresponding to queue numbers 2, 3, and 4). That is, when the first-type refresh rate queue is configured, the 1st refresh rate is set to be less than the display frame rate.

In some embodiments, when the screen is not initialized, and the screen is in an always on display (always on display, AOD) mode or a text-based user interface (text-based user interface, TUI) mode, it is not appropriate to configure a refresh rate queue.

Based on this, before the display driver configures the first-type refresh rate queue for the DDIC, or before the display driver configures the second-type refresh rate queue for the DDIC, the display driver needs to determine that the display screen corresponding to the DDIC has been initialized, and the display screen is not currently in the AOD mode or the TUI mode.

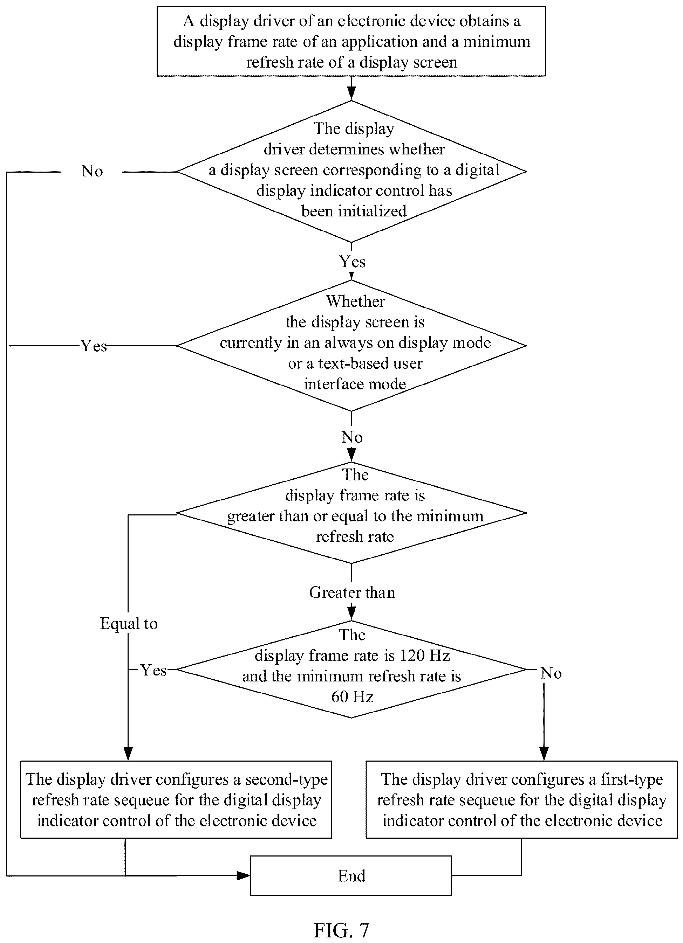

Specifically, before the display driver configures the first-type refresh rate queue or the second-type refresh rate queue for the DDIC, the display driver further determines whether the display screen corresponding to the DDIC is initialized, and whether the display screen is currently in the AOD mode or the TUI mode. If the display screen has been initialized and the display screen is not in the AOD mode or the TUI mode, the display driver enters a process of configuring the first-type refresh rate queue or the second-type refresh rate queue for the DDIC. Referring to FIG. 7, FIG. 7 is a flowchart of an image display method according to an embodiment of this application.

In some embodiments, when the display driver obtains a new display frame rate of the APP and/or a new minimum refresh rate, because the display frame rate and/or the minimum refresh rate changes, a refresh rate queue SEQ correspondingly configured for the DDIC also needs to be updated. Therefore, the display driver needs to reconfigure a new refresh rate queue for the DDIC based on the new display frame rate and/or the new minimum refresh rate.

Specifically, based on different types of refresh rate queues, refresh rate switching includes switching from the first-type refresh rate queue to the second-type refresh rate queue, and switching from the second-type refresh rate queue to the first-type refresh rate queue. In addition, based on different display frame rates or different minimum refresh rates, there are different first-type refresh rate queues or different second-type refresh rate queues correspondingly. Therefore, switching between different first-type refresh rate queues, and switching between different second-type refresh rate queues are further included.

For example, the foregoing Table 1 is used as an example, and the refresh rate queue of the DDIC is switched from a refresh rate queue corresponding to a queue number 2 to a refresh rate queue corresponding to a queue number 3, that is, switching between different first-type refresh rate queues. The refresh rate queue of the DDIC is switched from the refresh rate queue corresponding to the queue number 2 to a refresh rate queue corresponding to a queue number 5, that is, switching from the first-type refresh rate queue to the second-type refresh rate queue. The refresh rate queue of the DDIC is switched from the refresh rate queue corresponding to the queue number 5 to a refresh rate queue corresponding to a queue number 6, that is, switching between different second-type refresh rate queues. The refresh rate queue of the DDIC is switched from the refresh rate queue corresponding to the queue number 5 to the refresh rate queue corresponding to the queue number 2, that is, switching from the second-type refresh rate queue to the first-type refresh rate queue.

Furthermore, when the display driver updates configuration of a refresh rate queue for the DDIC, a step of determining whether a refresh rate queue that currently needs to be updated is the same as a refresh rate queue currently employed by the DDIC may be added. If it is determined that the two refresh rate queues are different, the display driver controls the DDIC to switch to a new refresh rate queue. If it is determined that the two refresh rate queues are the same, the display driver may terminate the configuration process, so as to save specific resources.

In some embodiments, due to a human vision problem, a user is more sensitive to the flickering phenomenon of the display screen in a case that display brightness is low or brightness of ambient light is low, and the flickering phenomenon is more obvious. Therefore, to avoid a serious flickering phenomenon in the case that display brightness is low or brightness of ambient light is low, the minimum refresh rate may be determined by a refresh rate decision module based on the display brightness and the brightness of ambient light. The brightness of ambient light may be detected by an ambient light sensor (sensor).

In addition, due to a software structure of an existing electronic device (referring to FIG. 6), if the refresh rate decision module in this embodiment of this application determines the minimum refresh rate, the minimum refresh rate needs to be delivered to the display driver through the SF and the HWC, which affects implementation of the refresh rate adaptation method in this embodiment of this application.

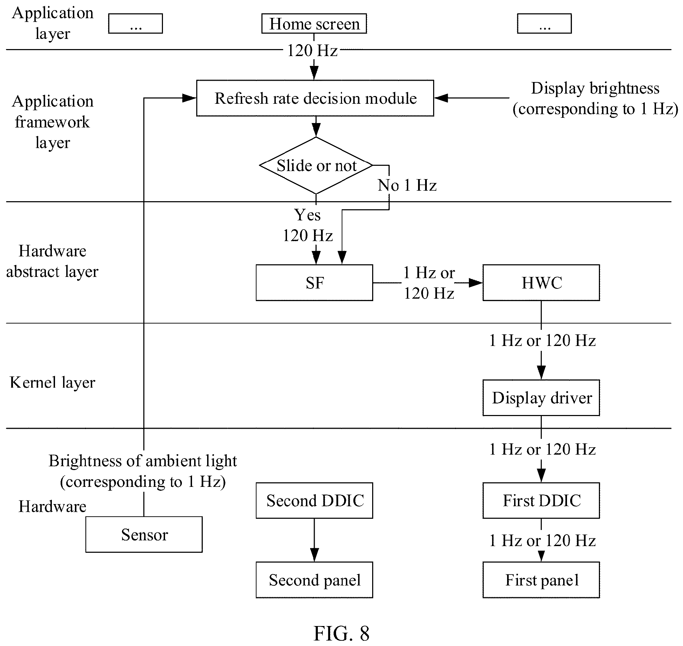

For example, referring to FIG. 8, FIG. 8 shows a process of layer interaction of a system of the image display method illustrated by using the first DDIC in the software structure shown in FIG. 6 as an example. For example, the APP is the home screen. The image display interaction process includes: The refresh rate decision module first obtains a required display frame rate of 120 Hz from the APP, and determines the minimum refresh rate of 1 Hz based on the display brightness and the brightness of ambient light. Then, the refresh rate decision module needs to determine whether to deliver the display frame rate of 120 Hz to the SF or deliver the minimum refresh rate of 1 Hz to the SF by determining whether the application is operated (for example, whether the home screen is sliding). Next, the SF notifies the HWC to send the delivered display frame rate of 120 Hz or the minimum refresh rate of 1 Hz to the display driver. The display driver then controls the DDIC to refresh an image based on the delivered display frame rate of 120 Hz or the minimum refresh rate of 1 Hz. It can be learned from the foregoing description that, based on the software structure of the existing electronic device, when the display brightness and the brightness of ambient light need to be considered to control the refresh rate of the DDIC, a switching instruction corresponding to 120 Hz or 1 Hz can only be successively delivered to the DDIC based on a priority of an actual requirement to control the DDIC to switch to the refresh rate of 120 Hz or 1 Hz. The display driver cannot simultaneously obtain the display frame rate and the minimum refresh rate from the refresh rate decision module, which is obviously contrary to the image display method in this embodiment of this application, thereby affecting implementation of the image display method in this embodiment of this application.

Therefore, to ensure that the display driver can simultaneously receive the display frame rate and the minimum refresh rate from the refresh rate decision module, in this embodiment of this application, a HAL interface definition language (HAL interface definition language, HIDL) interface is added, and the refresh rate decision module invokes the HIDL interface to notify the display driver of a minimum refresh rate currently determined.

Based on this, the obtaining, by the display driver of the electronic device, the display frame rate and the minimum refresh rate of an application includes: The refresh rate decision module of the electronic device obtains the display frame rate of the application, and determines the minimum refresh rate based on the display brightness and the brightness of ambient light; and the refresh rate decision module delivers the display frame rate to the display driver through the surface flinger and the hardware composer, and delivers the minimum refresh rate to the display driver through the hardware abstract layer interface.

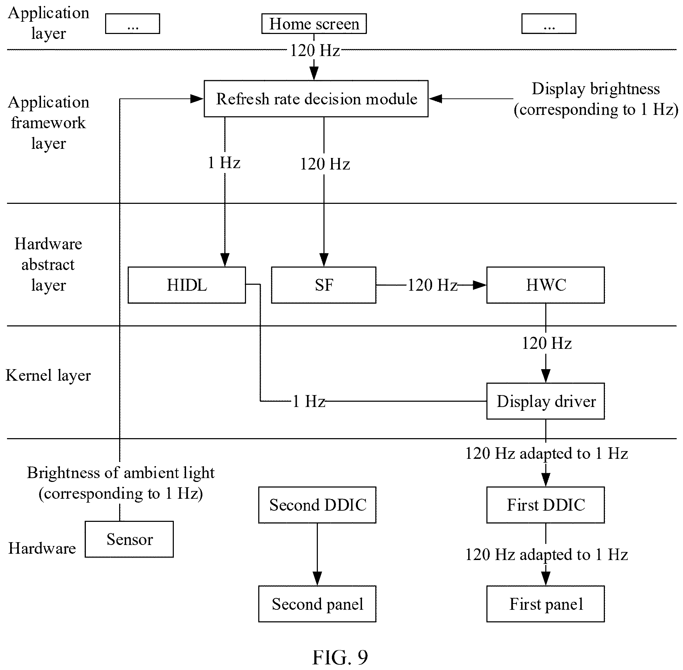

Referring to FIG. 9, FIG. 9 is a block diagram of an improved software structure of an electronic device 100 according to an embodiment of this application. FIG. 9 is further a schematic diagram of layer interaction of an improved system according to an embodiment of this application by using the first DDIC as an example.

Specifically, in this embodiment of this application, a channel for delivering a refresh rate is added by adding an HIDL interface mainly based on the software architecture shown in FIG. 8. That is, the display driver is notified of the minimum refresh rate through the HIDL interface, so that the display driver can simultaneously receive the display frame rate of the application and the minimum refresh rate. Furthermore, the display driver may configure the first-type refresh rate queue or a second refresh rate for the DDIC based on the display frame rate and the minimum refresh rate.

It can be learned from the foregoing description that, according to the improved solution in this embodiment of this application, after the refresh rate decision module determines the minimum refresh rate based on actual display brightness and actual brightness of ambient light, the minimum refresh rate is delivered to the display driver through a new channel. This can implement refresh rate adaptation while avoiding a flickering phenomenon during display in the case of low display brightness or low ambient light.

In some embodiments, the determining the minimum refresh rate based on the display brightness and the brightness of ambient light includes: determining that the minimum refresh rate is 10 Hz or 30 Hz when the display brightness is greater than or equal to 50 nits and the brightness of ambient light is greater than or equal to 50 luxes; and determining that the minimum refresh rate is 1 Hz when the display brightness is greater than or equal to 300 nits and the brightness of ambient light is greater than or equal to 50 luxes; and determining that the minimum refresh rate is 60 Hz when the display brightness is less than 50 nits or the brightness of ambient light is less than 50 luxes.

Specifically, the minimum refresh rate is determined based on different display brightness and different brightness of ambient light, where the brightness of ambient light may be detected through an ambient light sensor. When the display brightness is greater than or equal to 50 nits and the brightness of ambient light is greater than or equal to 50 luxes, it indicates that the refresh rate of the display screen may be adapted to 10 Hz or 30 Hz at a minimum, that is, the minimum refresh rate may be 10 Hz or 30 Hz. When the display brightness is greater than or equal to 3000 nits and the brightness of ambient light is greater than or equal to 50 luxes, it indicates that the refresh rate of the display screen may be adapted to 1 Hz at a minimum, that is, the minimum refresh rate is equal to 1 Hz. In a case other than the foregoing two cases, that is, when the display brightness is less than or equal to 5 nits or the ambient light is less than or equal to 50 luxes, the minimum refresh rate is equal to 60 Hz. Therefore, in this embodiment of this application, the minimum refresh rate is determined by obtaining specific display brightness and detecting actual brightness of ambient light, which can ensure that a flickering problem during display can be avoided when the DDIC is controlled, based on the refresh rate queue SEQ configured based on the minimum refresh rate, to refresh an image.

Another embodiment of this application provides an electronic device, and a plurality of applications are installed in the electronic device. The electronic device includes a display screen, a memory, a display driver integrated circuit, and one or more processors. The display screen, the memory, and the display driver integrated circuit are coupled to the processor. For example, the display screen, the memory, and display driver integrated circuit may be coupled to the processor through a bus.

The memory stores one or more computer programs. When the processor executes the computer program, the electronic device is enabled to perform the image display method according to any one of the foregoing embodiments. For a structure of the electronic device, refer to the structure of the electronic device 100 in FIG. 5. Specifically, the display driver integrated circuit is configured to refresh an image to the display screen based on a refresh rate in the first-type refresh rate queue or the second-type refresh rate queue.

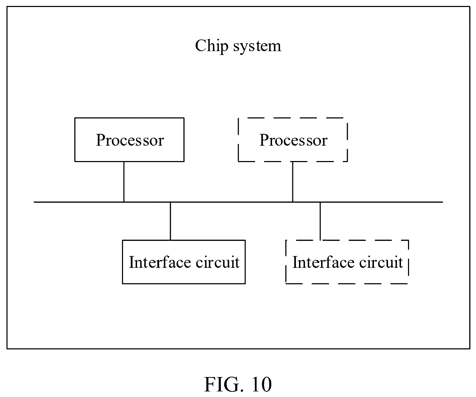

Another embodiment of this application provides a chip system, and the chip system may include the foregoing display driver integrated circuit. As shown in FIG. 10, the chip system includes at least one processor and at least one interface circuit.

The processor and the interface circuit may be interconnected through a line. For example, the interface circuit may be configured to receive a signal from another apparatus (for example, a memory of an electronic device and a processor of the electronic device). For another example, the interface circuit may be configured to send a signal (for example, refreshing an image to the display screen of the electronic device) to another apparatus (for example, a display screen of the electronic device). For example, the interface circuit may read an instruction stored in the memory and send the instruction to the processor of the chip system. When the instruction is executed by the processor of the chip system, the electronic device may be employed in cooperation to refresh an image to the display screen of the electronic device based on the refresh rate in the first-type refresh rate queue or the second-type refresh rate queue in the foregoing embodiments. Certainly, the chip system may further include other discrete components. This is not specifically limited in this embodiment of this application.

Another embodiment of this application provides a computer-readable storage medium. The computer-readable storage medium stores a computer program, and when the computer program is executed by a processor in an electronic device, the electronic device is enabled to implement the image display method according to any one of the foregoing embodiments.

An embodiment of this application further provides a computer program product. When the computer program product runs on a computer, the computer is enabled to perform the functions or steps in the foregoing method embodiments.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. An image display method, wherein the method is applied to an electronic device, the electronic device comprises a display screen, and a plurality of applications are installed in the electronic device; and the method comprises:
obtaining, by a display driver of the electronic device, a display frame rate of an application running in a foreground and a minimum refresh rate of the display screen;
configuring, by the display driver, a first-type refresh rate queue for a display driver integrated circuit of the electronic device in a case that the display frame rate is greater than the minimum refresh rate, wherein the first-type refresh rate queue comprises at least two refresh rates that are arranged from high to low, and each of the refresh rates is greater than or equal to the display frame rate and less than or equal to the minimum refresh rate;
controlling, by the display driver, the display driver integrated circuit to refresh an image to the display screen based on a 1st refresh rate in the first-type refresh rate queue; and
in a case that an SF of the electronic device does not send an image to the display driver, controlling, by the display driver based on a rank order of refresh rates in the first-type refresh rate queue, the display driver integrated circuit to refresh an image to the display screen based on a next refresh rate in the first-type refresh rate queue.

2. The method according to claim 1, wherein the method further comprises:
configuring, by the display driver, a second-type refresh rate queue for the display driver integrated circuit of the electronic device in a case that the display frame rate is equal to the minimum refresh rate, wherein a last refresh rate in the second-type refresh rate queue is equal to the display frame rate, and refresh rates preceding the last refresh rate are all null; and
controlling, by the display driver, the display driver integrated circuit to refresh an image to the display screen based on the last refresh rate in the second-type refresh rate queue.

3. The method according to claim 1 or 2, wherein the obtaining a display frame rate of an application running in a foreground and a minimum refresh rate of the display screen comprises:
obtaining, by a refresh rate decision module of an application framework layer in the electronic device, the display frame rate of the application running in the foreground, and determining the minimum refresh rate based on display brightness of the display screen and brightness of ambient light; and
delivering, by the refresh rate decision module, the display frame rate to the display driver through the SF and an HWC, and delivering the minimum refresh rate to the display driver through a hardware abstract layer interface.

4. The method according to claim 3, wherein the determining the minimum refresh rate based on display brightness of the display screen and brightness of ambient light comprises:
when the display brightness is greater than or equal to 50 nits and the brightness of ambient light is greater than or equal to 50 luxes, determining that the minimum refresh rate is 10 Hz or 30 Hz;
when the display brightness is greater than or equal to 300 nits and the brightness of ambient light is greater than or equal to 50 luxes, determining that the minimum refresh rate is 1 Hz; and
when the display brightness is less than 50 nits or the brightness of ambient light is less than 50 luxes, determining that the minimum refresh rate is 60 Hz.

5. The method according to claim 1, wherein after the display driver integrated circuit refreshes an image to the display screen based on a refresh rate in the first-type refresh rate queue, the method further comprises:
when the SF resumes sending an image to the display driver, controlling, by the display driver, the display driver integrated circuit to refresh an image to the display screen based on the 1st refresh rate in the first-type refresh rate queue.

6. The method according to any one of claims 1-5, wherein the display driver integrated circuit comprises a first display driver integrated circuit with a TEI function; and the method further comprises:
when the display driver configures the first-type refresh rate queue for the first display driver integrated circuit, synchronously delivering an instruction to control the first display driver integrated circuit to disable a TE MASK function and control initialization of the TEI function.

7. The method according to any one of claims 1-5, wherein the display driver integrated circuit comprises a second display driver integrated circuit without a TEI function; and the method further comprises:
when the display driver configures the first-type refresh rate queue for the second display driver integrated circuit, synchronously delivering an instruction to control the second display driver integrated circuit to disable a TE MASK function, and reporting a TE signal generated by the second display driver integrated circuit to the SF based on an actual working frame rate of the SF.

8. The method according to claim 2, wherein the method further comprises:
when the display driver configures the second-type refresh rate queue for the display driver integrated circuit, synchronously delivering an instruction to control the display driver integrated circuit to enable a TE MASK function.

9. The method according to claim 1 or 2, wherein the configuring, by the display driver, a first-type refresh rate queue for a display driver integrated circuit of the electronic device in a case that the display frame rate is greater than the minimum refresh rate comprises:
in a case that the display frame rate is greater than the minimum refresh rate, and that the display frame rate is not equal to 120 Hz and the minimum refresh rate is not equal to 60 Hz, configuring, by the display driver, the first-type refresh rate queue for the display driver integrated circuit of the electronic device, wherein the 1st refresh rate in the first-type refresh rate queue is less than or equal to the display frame rate, a refresh rate following the 1st refresh rate is null, or the refresh rate following the 1st refresh rate is less than the display frame rate and is greater than or equal to the minimum refresh rate; and
in a case that the display frame rate is greater than the minimum refresh rate, and that the display frame rate is equal to 120 Hz and the minimum refresh rate is equal to 60 Hz, configuring, by the display driver, a second-type refresh rate queue for the display driver integrated circuit of the electronic device, wherein a last refresh rate in the second-type refresh rate queue is equal to 60 Hz, and refresh rates preceding the last refresh rate are all null.

10. The method according to claim 9, wherein the display driver integrated circuit comprises a first display driver integrated circuit with a TEI function, and a length of a refresh rate queue of the first display driver integrated circuit is 5; and configuring, by the display driver, the first-type refresh rate queue for the first display driver integrated circuit comprises:
when the display frame rate is 120 Hz and the minimum refresh rate is 30 Hz, or when the display frame rate is 60 Hz and the minimum refresh rate is 30 Hz, the 1st refresh rate in the first-type refresh rate queue is set to 60 Hz, the last refresh rate is set to 30 Hz, and a remaining refresh rate is set to null;
when the display frame rate is 120 Hz and the minimum refresh rate is 10 Hz, or when the display frame rate is 60 Hz and the minimum refresh rate is 10 Hz, the 1st refresh rate in the first-type refresh rate queue is set to 60 Hz, a 2nd refresh rate is set to 30 Hz, a 3rd refresh rate is set to 20 Hz, a 4th refresh rate is set to null, and a 5th refresh rate is set to 10 Hz; and
when the display frame rate is 120 Hz and the minimum refresh rate is 1 Hz, or when the display frame rate is 60 Hz and the minimum refresh rate is 1 Hz, the 1st refresh rate in the first-type refresh rate queue is set to 60 Hz, the 2nd refresh rate is set to 30 Hz, the 3rd refresh rate is set to 20 Hz, the 4th refresh rate is set to 10 Hz, and the 5th refresh rate is set to 1 Hz.

11. The method according to claim 9, wherein the display driver integrated circuit comprises a second display driver integrated circuit without a TEI function, and a length of a refresh rate queue of the second display driver integrated circuit is 4; and configuring, by the display driver, the first-type refresh rate queue for the second display driver integrated circuit comprises:
when the display frame rate is 120 Hz and the minimum refresh rate is 30 Hz, or when the display frame rate is 60 Hz and the minimum refresh rate is 30 Hz, the 1st refresh rate in the first-type refresh rate queue is set to 60 Hz, the last refresh rate is set to 30 Hz, and a remaining refresh rate is set to null;
when the display frame rate is 120 Hz and the minimum refresh rate is 10 Hz, or when the display frame rate is 60 Hz and the minimum refresh rate is 10 Hz, the 1st refresh rate in the first-type refresh rate queue is set to 60 Hz, a 2nd refresh rate is set to 30 Hz, a 3rd refresh rate is set to null, and a 4th refresh rate is set to 10 Hz; and
when the display frame rate is 120 Hz and the minimum refresh rate is 1 Hz, or when the display frame rate is 60 Hz and the minimum refresh rate is 1 Hz, the 1st refresh rate in the first-type refresh rate queue is set to 60 Hz, the 2nd refresh rate is set to 30 Hz, the 3rd refresh rate is set to 10 Hz, and the 4th refresh rate is set to 1 Hz.

12. The method according to claim 1 or 2, wherein before the configuring a first-type refresh rate queue for a display driver integrated circuit of the electronic device in a case that the display frame rate is greater than the minimum refresh rate, or the configuring a second-type refresh rate queue for the display driver integrated circuit in a case that the display frame rate is equal to the minimum refresh rate, the method further comprises:
determining, by the display driver, that a display screen corresponding to the display driver integrated circuit has been initialized, and that the display screen is not currently in an always on display mode or a text-based user interface mode.

13. The method according to any one of claims 1-12, wherein the application comprises at least two types of running scenarios, and display frame rates of the application in a plurality of running scenarios of the at least two types of running scenarios are different; and
the obtaining, by a display driver of the electronic device, a display frame rate of an application running in a foreground comprises:
obtaining, by the display driver, a display frame rate of the application in a current running scenario.

14. An electronic device, comprising a display screen, a memory, a display driver integrated circuit, and one or more processors, wherein a plurality of applications are installed in the electronic device; the display screen, the memory, and the display driver integrated circuit are coupled to the processor; the memory stores one or more pieces of computer program code, and the computer program code comprises computer instructions; when the processor executes the computer instructions, the electronic device is enabled to perform the image display method according to any one of claims 1-13; and the display driver integrated circuit is configured to refresh an image to the display screen based on a refresh rate in a first-type refresh rate queue or a second-type refresh rate queue.

15. A computer-readable storage medium, wherein the computer-readable storage medium stores a computer program, and when the computer program is executed by a processor of an electronic device, the electronic device is enabled to perform the image display method according to any one of claims 1-13.

16. A computer program product, wherein when the computer program product runs on an electronic device, the electronic device is enabled to perform the image display method according to any one of claims 1-13.
